# EUROPEAN PATENT SPECIFICATION

(11) **EP 1 533 267 B1**
(45) Date of publication and mention of the grant of the patent: **30.08.2006**
(21) Application number: 03425746.9
(22) Date of filing: 20.11.2003
(51) Int. Cl.: B66D 5/26, B60T 13/22

(54) **A brake control device for winches activated by hydraulic motors**
Bremssteuervorrichtung für Winde mit Hydraulikmotor
Dispositif de commande de frein pour treuil à moteur hydraulique

(43) Date of publication of application: 25.05.2005
(73) Proprietor: OIL CONTROL S.p.A., 20122 Milano (IT)
(72) Inventor: Storci, Andrea, 42015 Nonantola (Modena) (IT)
(74) Representative: Gotra, Stefano

(56) References cited:
- DE-A- 10 213 010
- FR-A- 2 492 357
- US-A- 4 458 791
- US-A- 5 611 199

## Description

The invention relates to a hydraulic control device for winches comprising a hydraulic motor and a brake according to the preamble of claim 1.

For activating winches in both directions a hydraulic motor can be used, which is set in rotation in either direction by a pressurised fluid according to whether a load is to be raised or lowered. A mechanical brake is usually provided which thanks to a spring is normally applied with the motor stationary, and is released by the fluid pressure also activating the motor. The brake acts to block the winch (and therefore the load) when the hydraulic motor is not in action and frees the rotation of the winch when the motor is activated.

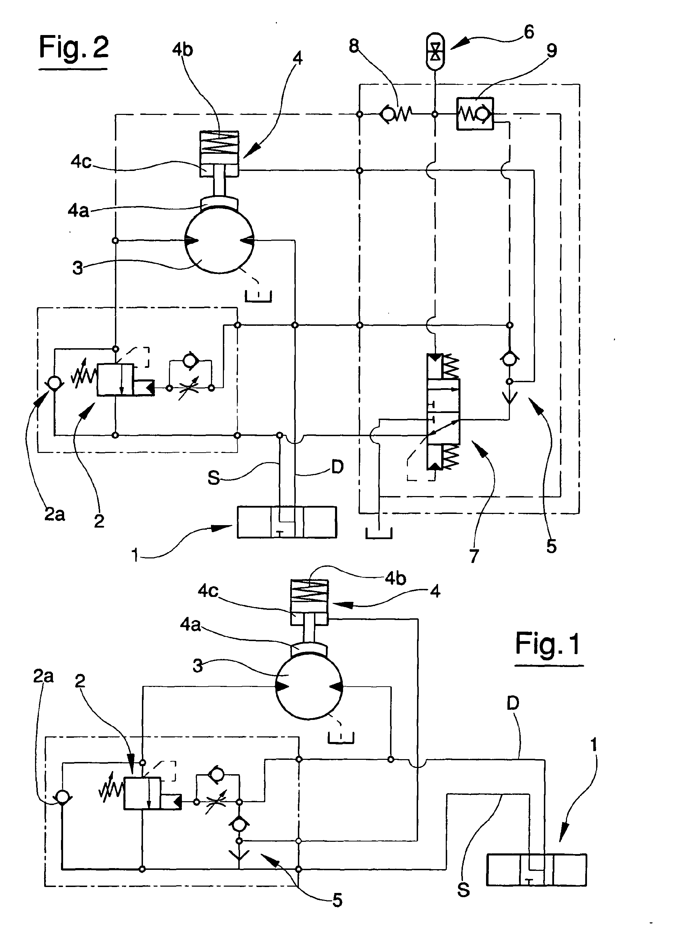

Figure 1 illustrates a known hydraulic circuit of a hydraulic control device according to the preamble of claim 1.

When these winches are inactive for a long time, it often happens that the motor, due to loss of fluid which can be brought about by leakage or other reasons, begins to empty. On activating the motor it can occur that the fluid no longer fills the motor chambers before the brake is released by the pressurised fluid. In this case the winch is freed and the load lowers uncontrolledly, a particularly undesirable occurrence, especially when the motor had been activated to cause the opposite movement, i.e. a raising of the load.

The main aim of the present invention is to obviate the drawbacks in the above-described prior art by providing a device which prevents, in any operative condition, an undesired release of the brake preventing movement of the winch, and therefore which also prevents an uncontrolled lowering of the load on the winch.

An advantage of the invention is that it provides a device which is particularly simple, economical and which is easily applicable to known devices.

These aims and advantages and more besides are all attained by the present invention, as definded in the appended claims.

Further characteristics and advantages of the present invention will better emerge from the detailed description that follows of a preferred but non-exclusive embodiment of the invention, illustrated purely by way of a nonlimiting example in the accompanying figures of the drawings, in which:
figure 1 is a diagram of a known-type hydraulic circuit of a hydraulic control device for operation of a hydraulic motor, winch and brake;
figure 2 is a diagram of the device of the invention applied to the hydraulic circuit of figure 1.

The device is applied to a mechanical brake 4 provided on a winch, not shown in the figures, which is activated by a hydraulic motor 3; the brake 4, which is of known type, is applied (i.e. performs its braking function) by action of an elastic element, generally a spring 4b, which presses a brake-shoe 4a against a rotating part of the winch, preventing rotation of the rotating part. The brake is released by means of a pressurised fluid which enters a chamber 4c of a single-acting cylinder, a piston of which is subject, in an opposite direction, to the action of the spring 4b.

The hydraulic motor 3 is supplied with motor fluid by a distributor 1, normally a centrally-open slide valve and in any case of known type, which, according to whether a load is to be raised or lowered, is activated, usually manually by an operator, to send fluid respectively into a conduit for raising S or into a conduit for lowering D a load. Obviously when pressurised fluid is sent into a conduit the fluid in the other conduit is evacuated of fluid from the motor. The lowering conduit D is directly connected to the motor 3 while the raising conduit S is connected to the motor 3 with an interpositioning of a valve group for control of fluid return, of known type and comprising a single-acting valve 2a, which enables free fluid delivery, and a pilot valve 2, which enables return of fluid through the raising conduit S when there is pressure in the lowering conduit D.

The foregoing description refers to the prior art for this type of circuit. In known circuits, such as the one represented schematically in figure 1, the delivery fluid in conduits S and D directly reaches, through a selector valve 5 connecting the chamber 4c with the pressurised conduit, the chamber 4c of the brake 4 in order to unblock the brake 4.

In the device of the invention there is direct connection of the lowering conduit D with the chamber 4c, through the selector valve 5.

The raising conduit S, however, is connected to the chamber 4c through a two-position three-way valve 7, of known type. In a first position thereof the valve 7 connects the chamber 4c with the raising conduit S at a point upstream of the valve group 2, 2a, i.e. downstream of the distributor 1. In a second position thereof the valve 7 connects the chamber 4c directly with the discharge.

The valve 7 is piloted into the first position by the pressure of the fluid in the raising conduit S upstream of the valve group 2, 2a, i.e. downstream of the distributor 1; the valve 7 is piloted into the second position by the pressure of fluid in the raising conduit S downstream of the valve group 2, 2a, i.e. immediately upstream of the motor 3. The pilot conduit takes fluid downstream of the valve group 2, 2a, for piloting the valve 7, and is connected, with interpositioning of a first single-acting valve 8, to an elastically-deformable closed chamber 6, which for the sake of simplicity can be termed an "accumulator" even though it does not exactly exhibit all of the elements of a traditional hydraulic accumulator, which is of known type. In other words the chamber 6 constitutes an elastically-expandable volume destined to receive and return oil; the function of the chamber 6 can be advantageously performed by a tube made of elastically deformable material, for example rubber, which exhibits a closed end and an end connected to the raising conduit S. The pressure of the fluid inside the closed chamber, together with the fluid pressure in the raising conduit S downstream of the valve group 2, 2a, pilots the valve 7 into the second position. In the absence of piloting pressures the valve 7 is conformed in such a way as to be in the first position; this conformation is obtained, in a known way, by specially calibrating the elastic elements with which these valves are usually equipped.

The elastically-deformable closed chamber 6 (or accumulator) is also connected to the discharge, with an interpositioning of a second single-acting valve 9; the valve 9 is arranged in such a way as to prevent passage of fluid, and is piloted to open by the fluid pressure in the lowering conduit D. The function of the second single-acting valve 9 is to discharge the pressure of the fluid inside the elastically-deformable closed chamber 6 when there is a delivery pressure in the lowering conduit D, i.e. during the load lowering phase.

The functioning of the device of the invention is as follows.

The diagram of figure 2 illustrates a situation in which there is no fluid pressure internally of the hydraulic circuit; in this situation the distributor 1 is in its open central position, and connects the raising conduit S and the lowering conduit D with the discharge. The valve 7 is in its first position and the elastically-deformable closed chamber 6 is empty. The brake 4 is pushed by the spring 4b into the braking position and prevents rotation of the winch it is connected to.

In order to raise a load, the distributor 1 is activated to send pressurised fluid into the raising conduit S and to discharge the lowering conduit D. Through the valve 7 and the selector valve 5, fluid arrives at the chamber 4c of the brake and releases the brake. At the same time the fluid arrives at the motor 3, through the single-acting valve 2a, and with the brake released the motor 3 is free to move and raise the winch and therefore the load. The outletting fluid from the motor 3 is sent to discharge through the lowering conduit D and the distributor 1.

The valve 7 is piloted into the first position by the fluid pressure in the raising conduit S upstream of the valve group 2, 2a and into the second position by the fluid pressure in the raising conduit S downstream of the valve group 2, 2a. The two pressures are practically identical, so the valve 7 remains in the first position thereof. The small flow of fluid in the pilot conduit which removes fluid downstream of the valve group 2, 2a loads the closed chamber 6 through the single-acting valve 8.

To halt the raising of the load the distributor 1 is brought back into its central position, in which the raising conduit S and the lowering conduit D are placed in communication with the discharge. The motor 3, no longer supplied with fluid, stops. The raising conduit S is no longer pressurised and therefore transmits no pilot pressure to the valve 7; the valve 7 is therefore only affected by the pressure of the fluid present in the closed chamber 6 which, given the presence of the single-acting valves 8 and 9, cannot discharge. The valve 7 therefore moves into the second position, in which the chamber 4c is connected to the discharge; the brake 4 is thus activated by the spring 4b and blocks any further rotations of the winch. It is worth noting that in this situation of "load stopped after a raising phase" the position of the valve 7 would enable discharge of the chamber 4c even if it were in the first position, as with the distributor in the central position the raising conduit S is connected to the discharge. The importance of having the valve 7 in the second position will better emerge from the continuing description herein below.

If, after the above-described "load stopped after a raising phase" position, the load is to be lowered, which is obtained by activating the distributor 1 in order to send pressurised fluid into the lowering conduit D and in order to discharge the raising conduit S, the fluid being delivered to the lowering conduit D arrives, through the selector valve 5 commutated by the same fluid, at the chamber 4c of the brake, releasing the brake and thus enabling the load to descend. This is independent of the position of the valve 7, the pressure in the closed chamber 6 and the pressure in the lowering conduit D. Thus the device behaves in a similar way to known-type circuits, such as the one illustrated in figure 1.

At the same time the pressure of the fluid in the lowering conduit D pilots the opening of the single-acting valve 9, thus enabling discharge of the fluid contained in the closed chamber 6 and the return of the valve 7 into the first position thereof. On completion of the load descent the distributor 1 is brought back into the central position and the whole circuit is returned to the start situation.

In a case where the "load stopped after a raising phase" situation is followed by a further load raising stage, obtained by activating the distributor 1 in such a way as to send pressurised fluid into the raising conduit S and to discharge to lowering conduit D, it can happen that for various reasons, for example an evacuation of the conduits or the motor 3 caused by leakage or by an excessively slow distributor 1 manoeuvre, the pressure of the fluid in the raising conduit S is not initially sufficient to sustain the load. In known circuits, in which the fluid passes directly from the raising conduit S to the chamber 4c of the brake 4 and releases it, instead of raising the load the result can be a sudden and undesired descent thereof.

With the device of the invention, the valve 7 is maintained in the second position by the pilot pressure of the fluid inside the closed chamber 6, preventing the release of the brake 4 up until the pressure of the fluid in the raising conduit S reaches a sufficient level to guarantee that the load is sustainable, i.e. about equal to the pressure in the closed chamber 6. When this pressure is reached, which as has been mentioned guarantees that the load is sustainable, preventing an undesired lowering thereof, the valve 7 is piloted to move into the first position and the brake 4 can be released.

A further situation could arise in which, after a partial descent of the load, after which the closed chamber 6 is discharged and the valve 7 is in the first position, it is desired to carry out a subsequent raising of the load. In this situation too it is possible, though less probable, that the pressure in the raising conduit S is not sufficient to sustain the load. In this case the load, instead of being raised as required, might descend as the fluid in the raising conduit S passes through the valve 7 in the first position, into the chamber 4c, releasing the brake 4. Should the motor 3 go into reverse, caused by the action of the load which is tending to lower, the motor 3 would start functioning as a pump, causing fluid to flow into the part of the raising conduit S arranged between the motor 3 and the valve group 2, 2a. As this fluid cannot discharge, being prevented from doing so by the single-acting valve 2a and the pilot valve 2, which is closed because there is no pilot pressure (during the raising manoeuvre the lowering conduit D is in discharge), the pressure in this part of the raising conduit S increases. This pressure increase pilots the valve 7 to reach the second position thereof, in which the chamber 4c is placed in discharge mode and the brake 4 is applied.

Thus, in the above case too, the device almost instantaneously counters the undesirable tendency of the load to descend. This situation continues up until the pressure of the fluid in the raising conduit S reaches a sufficient level to guarantee sustaining of the load. When this pressure is reached, which as has been mentioned guarantees the sustaining of the load, thus preventing an undesired lowering thereof, the valve 7 is piloted into the first position and the brake 4 can be released.

## Claims

1. A hydraulic control device for winches comprising a hydraulic motor (3) and a brake (4), the brake (4) being applied by means of an elastic element and released by a pressurised fluid introduced in a chamber (4c) of a single-acting cylinder which contrasts an action of the elastic element, the fluid coming from a load raising conduit (S) on which a valve group (2, 2a) of known type for fluid return control is predisposed, which raising conduit (S) sends fluid to the hydraulic motor (3) to cause a raising of a load applied on the winch, and by a load lowering conduit (D) which sends fluid to the hydraulic motor (3) in order to cause a lowering of the load applied on the winch, **characterised in that**: the device comprises a two-position three-way valve (7) of known type which, in a first position thereof, connects the chamber (4c) with the raising conduit (S) upstream of the valve group (2, 2a) and in a second position thereof connects the chamber (4c) directly with the discharge; the two-position three-way valve (7) is piloted into the first position thereof by a pressure of the fluid in the raising conduit (S) upstream of the valve group (2, 2a), and is piloted into the second position thereof by a pressure of the fluid in the raising conduit (S) downstream of the valve group (2, 2a) and by a pressure existing in an elastically deformable closed chamber (6) of known type, connected to the raising conduit (S) downstream of the valve group (2, 2a) with an interpositioning of a first single-acting valve (8).

2. The device of claim 1, **characterised in that** the two-position three-way valve (7) is conformed in such a way as normally to be in the first position thereof.

3. The device of claim 1, **characterised in that** the elastically deformable closed chamber (6) is connected to the discharge with an interpositioning of a second single-acting valve (9) piloted to open by the pressure of fluid in the lowering conduit (D).

4. The device of claim 1, **characterised in that** the elastically deformable closed chamber (6) comprises a tube made of an elastically deformable material which exhibits a closed end and an end connected to the raising conduit (S).

5. The device of claim 1, **characterised in that** it comprises a selector valve (5) of known type which selectively connects the chamber (4c) either with the two-position three-way valve (7) or with the lowering conduit (D).

## Patentansprüche

1. Hydraulische Steuervorrichtung für Winden, enthaltend einen Hydraulikmotor (3) und eine Bremse (4), wobei die Bremse (4) mit Hilfe eines elastischen Elementes betätigt und durch eine unter Druck stehende Flüssigkeit gelöst wird, eingeleitet in eine Kammer (4c) eines einfachwirkenden Zylinders, welcher der Wirkung des elastischen Elementes entgegenwirkt, wobei die Flüssigkeit aus einer Lastenhebeleitung (S) kommt, an welcher eine Ventilgruppe (2, 2a) von bekannter Art zur Steuerung des Rücklaufs der Flüssigkeit vorgesehen ist, welche Hebeleitung (S) die Flüssigkeit an den Hydraulikmotor (3) leitet, um das Anheben einer an der Winde angebrachten Ladung zu bewirken, und aus einer Lastensenkleitung (D), welche Flüssigkeit an den Hydraulikmotor (3) leitet, um das Senken der an der Winde angebrachten Last zu bewirken, **dadurch gekennzeichnet, dass** die Vorrichtung ein Zweipositions-Dreiwegeventil (7) von bekanntem Typ enthält, welches in einer ersten Position die Kammer (4c) mit der Hebeleitung (S) stromaufwärts der Ventilgruppe (2, 2a) verbindet, und in einer zweiten Position die Kammer (4c) direkt mit dem Ablass; wobei das Zweipositions-Dreiwegeventil (7) in seine erste Position durch einen Druck der Flüssigkeit in der Hebeleitung (S) stromaufwärts der Ventilgruppe (2, 2a) gesteuert wird, und in seine zweite Position durch einen Druck der Flüssigkeit in der Hebeleitung (S) stromabwärts der Ventilgruppe (2, 2a) gesteuert wird, und durch einen Druck, der in einer elastisch verformbaren, geschlossenen Kammer (6) von bekanntem Typ vorhanden ist, verbunden mit der Hebeleitung (S) stromabwärts der Ventilgruppe (2, 2a) unter Zwischensetzen eines ersten einfachwirkenden Ventils (8).

2. Vorrichtung nach Patentanspruch 1, **dadurch gekennzeichnet, dass** das Zweipositions-Dreiwegeventil (7) auf solche Weise ausgebildet ist, dass es sich normalerweise in seiner ersten Position befmdet.

3. Vorrichtung nach Patentanspruch 1, **dadurch gekennzeichnet, dass** die elastisch verformbare, geschlossene Kammer (6) an den Ablass angeschlossen ist, unter Zwischensetzen eines zweiten einfachwirkenden Ventils (9), gesteuert zum Öffnen durch den Druck der Flüssigkeit in der Senkleitung (D).

4. Vorrichtung nach Patentanspruch 1, **dadurch gekennzeichnet, dass** die elastisch verformbare, geschlossene Kammer (6) ein Rohr aus elastisch verformbarem Material enthält, welches ein geschlossenes Ende aufweist und ein Ende an die Hebeleitung (S) angeschlossen hat.

5. Vorrichtung nach Patentanspruch 1, **dadurch gekennzeichnet, dass** es ein Wahlventil (5) von bekanntem Typ enthält, welches wahlweise die Kammer (4c) entweder mit dem Zweipositions-Dreiwegeventil (7) oder mit der Senkleitung (D) verbindet.

## Revendications

1. Dispositif de commande hydraulique pour treuils comprenant un moteur hydraulique (3) et un frein (4), le frein (4) étant actionné par un élément élastique et relâché par l'intermédiaire d'un fluide pressurisé introduit dans une chambre (4c) d'un vérin à simple effet contrastant une action de l'élément élastique, le fluide provenant d'un conduit de montée de la charge (S) sur lequel est prédisposé un groupe de vanne (2, 2a) de type connu de contrôle du retour de fluide, lequel conduit de montée (S) envoie du fluide au moteur hydraulique (3) pour causer un soulèvement d'une charge appliquée sur le treuil, et par un conduit de descente de la charge (D) qui envoie le fluide vers le moteur hydraulique (3) pour causer la descente de la charge appliquée sur le treuil, **caractérisé en ce que**: le dispositif comprend une valve à trois voies et deux positions (7) de type connu qui, dans sa première position, connecte la chambre (4c) au conduit de montée (S) en amont du groupe de vanne (2, 2a) et, dans sa seconde position, connecte la chambre (4c) directement avec l'évacuation; la valve trois voies deux positions (7) est pilotée dans sa première position par une pression du fluide dans le conduit de montée (S) en amont du groupe de vanne (2, 2a), et est pilotée dans sa seconde position par une pression du fluide dans le conduit de montée (S) en aval du groupe de vanne (2, 2a) et par une pression existant dans une chambre fermée élastiquement déformable (6) de type connu, connectée au conduit de montée (S) en aval du groupe de vanne (2, 2a) avec l'interposition d'une première valve unidirectionnelle (8).

2. Dispositif selon la revendication 1, **caractérisé en ce que** la valve trois voies deux positions (7) est conformée de manière à être normalement dans sa première position.

3. Dispositif selon la revendication 1, **caractérisé en ce que** la chambre fermée élastiquement déformable (6) est connectée à l'évacuation avec une interposition d'une seconde valve unidirectionnelle (9) pilotée pour s'ouvrir par la pression du fluide dans le conduit de descente (D).

4. Dispositif selon la revendication 1, **caractérisé en ce que** la chambre fermée élastiquement déformable (6) comprend un tube réalisé en un matériau élastiquement déformable et présentant une extrémité fermée et une extrémité connectée au conduit de montée (S).

5. Dispositif selon la revendication 1, **caractérisé en ce qu'**il comprend une valve sélectrice (5) de type connu qui connecte sélectivement la chambre (4c) soit avec la valve trois voies deux positions (7) soit avec le conduit de descente (D).
